# EUROPÄISCHE PATENTSCHRIFT

(11) **EP 2 922 700 B1**
(45) Veröffentlichungstag und Bekanntmachung des Hinweises auf die Patenterteilung: **01.04.2020**
(21) Anmeldenummer: 13805273.3
(22) Anmeldetag: 18.11.2013
(51) Int. Cl.: B32B 37/14, B64C 1/40, G10K 11/172, B32B 3/12

(54) **PANEEL UND VERFAHREN ZUR HERSTELLUNG EINES PANEELS**
PANEL AND METHOD FOR PRODUCING A PANEL
PANNEAU ET PROCÉDÉ DE PRODUCTION D'UN PANNEAU

(30) Priorität: 21.11.2012 DE 102012022713
(43) Veröffentlichungstag der Anmeldung: 30.09.2015
(73) Patentinhaber: Airbus Operations GmbH, 21129 Hamburg (DE)
(72) Erfinder: GINOVSKI, Mirko, 86156 Augsburg (DE); MÜLLER, Jens, 88471 Laupheim (DE); GRABOW, Michael, 21129 Hamburg (DE); GRENZING, Benjamin, 21129 Hamburg (DE)
(74) Vertreter: Isarpatent
(86) Internationale Anmeldenummer: PCT/EP2013/003467
(87) Internationale Veröffentlichungsnummer: WO 2014/079553

(56) Entgegenhaltungen:
- EP-A2- 0 787 578
- EP-A2- 1 078 821

## Beschreibung

Die Erfindung betrifft ein Paneel zur Verkleidung einer Decke oder Wand in einer Kabine, insbesondere der Kabine eines Passagierflugzeugs, sowie ein Verfahren zur Herstellung eines solchen Paneels.

Nach dem Stand der Technik sind allgemein sogenannte "Sandwich-Paneele" bekannt, welche insbesondere zur Verkleidung von Decken und/oder Wänden in Kabinen von Passagierflugzeugen verwendet werden. Ein solches Sandwich-Paneel besteht aus einem leichtgewichtigen Kern, der beidseitig mit einer Deckschicht laminiert ist. Der Kern weist eine aus einer Vielzahl von Wänden gebildete Wabenstruktur auf. Diese Zellwände sind aus einem mit Phenolharz imprägnierten Faserpapier hergestellt, es können auch andere Materialien wie Karton, Kunststoff usw. verwendet werden. Die Deckschicht besteht üblicherweise aus einem mit Harz imprägnierten Fasergewebe oder -gelege. Zur Herstellung des Sandwich-Paneels werden die beiden Öffnungsebenen der Wabenplatte jeweils mit einem Halbzeug bzw. Prepreg bedeckt, welches aus einem mit Harz imprägnierten Fasergewebe oder -gelege gebildet ist. Das Halbzeug wird unter Druck- und Temperatureinwirkung mit der Wabenplatte laminiert. Dabei ist ein Druck so gewählt, dass die Wabenstruktur der Platte vollständig erhalten bleibt.

Sandwich-Paneels sind leichtgewichtig und weisen relativ schlechte schalldämmende Eigenschaften auf. Zur Steigerung des Flugkomforts werden die schalldämmenden Eigenschaften herkömmlicher Sandwich-Paneele nicht mehr als ausreichend angesehen. Zur Verbesserung der Schalldämmung ist man dazu übergegangen, auf der Rückseite der Kabinenwand oder -decke und dem Sandwich-Paneel eine Schicht aus Silikonfolie und/oder Glaswolle einzuschalten. Damit wird zwar eine bessere Schalldämmung erreicht, gleichzeitig aber nachteiligerweise das Gewicht des Flugzeugs erhöht.

Aus der DE 23 02 989 A ist ein Verfahren zum Biegen einer Sandwichplatte bekannt, wobei die Sandwichplatte aus Blech bestehende Deckschichten und einen mit diesen fest verbundenen Kern aufweist, wobei die Platte unter gleichzeitigem Quetschen des Kerns bis zum Erreichen des gewünschten Biegewinkels gebogen wird. Weiterer Stand der Technik ist bekannt aus der FR 1 260 187 A, US 3 687 767 A, US 3 412 513 A, DE 18 16 894 U.

Aus der US 4,855,182 ist noch ein weiterer Stand der Technik bekannt, wobei ein Paneel bei dem eine Platte beidseitig mit einer unter Druck und Temperatur ausgehärteten Deckschicht aus mit Harz oder einem Thermoplast imprägniertem Fasergewebe oder -gelege laminiert ist, wobei die Platte einen Kern mit einer aus einer Vielzahl von in Wänden gebildeten Wabenstruktur aufweist, wobei die Wände in einem vorgegebenen Bereich der Platte gestaucht; sind, und wobei der vorgegebene Bereich der Platte von ungestauchten Bereichen der Platte umgeben ist.

Aufgabe der Erfindung ist es, die Nachteile aus dem Stand der Technik zu beseitigen. Es soll insbesondere ein Paneel mit verbesserten schallisolierenden Eigenschaften angegeben werden. Nach einem weiteren Ziel der Erfindung soll ein möglichst einfach und kostengünstiges Verfahren zur Herstellung eines solchen Paneels angegeben werden.

Diese Aufgabe wird durch die Merkmale des unabhängigen Anspruchs 1 und des Nebengeordneten Anspruchs 3 gelöst. Zweckmäßige Ausgestaltungen der Erfindung ergeben sich aus den Merkmalen der jeweils abhängigen Ansprüche.

Erfindungsgemäß wird ein Paneel zur Verkleidung einer Decke oder Wand in einer Kabine, insbesondere der Kabine eines Passagierflugzeugs vorgeschlagen, bei dem eine Platte beidseitig mit einer unter Druck und Temperatur ausgehärteten Deckschicht aus mit Harz oder einem Thermoplast imprägniertem Fasergewebe oder -gelege laminiert ist, wobei die Platte zumindest einen Kern mit einer aus einer Vielzahl von in Wänden gebildeten Wabenstruktur aufweist. Die Wände der Wabenstruktur sind in einem vorgegebenen Bereich der Platte, insbesondere abschnittsweise bzw. teilweise, um 5% bis 50 %, bevorzugt um 10% bis 50%, gestaucht oder geknickt.

In Ausgestaltungen der Erfindung ist vorgesehen, dass die Knickung oder Stauchung der Zellwände derart erfolgt ist bzw. erfolgt, dass in einem Frequenzbereich oberhalb von 700 Hz ein erhöhter Transmissionsverlust erreicht ist.

Die Zellwände können aus einem Papier, insbesondere Faserpapier, hergestellt sein. Bevorzugt verlaufen die Zellwände der Wabenstruktur parallel bzw. im Wesentlichen parallel, und/oder in spitzem Winkel, zur Normalenrichtung der Deckschicht. Bei dem Wabenmaterial kann es sich auch um ein Schaummaterial handeln, wobei die Stauchung der die Poren des Schaummaterials ausbildenden Wände derart erfolgt ist, dass die Dicke des Kerns um 5% bis 50%, bevorzugt um 10% bis 50% reduziert ist.

Mit der Stauchung bzw. Knickung, insbesondere derart, dass der Kern um 5% bis 50%, bevorzugt um 10% bis 50% in der Dicke reduziert ist, können die geräuschdämmenden Eigenschaften des Paneels bzw. der Platte verbessert werden. Unter Verwendung des erfindungsgemäßen Paneels kann die nach dem Stand der Technik zur Geräuschdämmung zusätzlich vorgesehene Schicht aus Glaswolle oder gar Schwerschicht weggelassen werden. Bei Verwendung des erfindungsgemäßen Paneels kann ein Sandwichbauteil für ein Passagierflugzeug mit verringertem Aufwand und Gewicht hergestellt werden.

Bei dem vorgegebenen Bereich, in welchem die Stauchung bzw. Knickung des Paneels, genauer des Kerns, vorhanden ist, kann es sich um einen oder mehrere, zumindest teilweise von ungestauchten Kernbereichen benachbarten Bereichen handeln. Der oder die vorgegebenen Bereiche sind von ungestauchten Kernbereichen zumindest teilweise umgeben und/oder berandet. Der vorgegebene Bereich mit Knickung bzw. Stauchung des Kerns beträgt einen Flächenanteil von zumindest 50% des gesamten Paneels. Ungestauchte Bereiche können nach Art von Stegen belassen sein, um insbesondere die mechanische Festigkeit des Paneels zu verbessern. Jedoch ist es auch möglich, dass das Paneel ganzflächig einen gestauchten Kern aufweist. In diesem Fall ist die Stauchung bzw. Knickung der Zellwände um 5% bis 50% bzw. 10% bis 50% im Verhältnis zum Paneel mit ungestauchtem Kern zu betrachten.

Zweckmäßigerweise ist die Wabenstruktur aus mit Harz, imprägniertem Faserpapier hergestellt. Das Faserpapier kann aus Aramidfasern hergestellt sein. Bei einem schaumartigen Kern kann dieser aus einem geschäumten Kunststoffmaterial, insbesondere aus einem geschlossenporigen oder offenporigen Kunststoffmaterial hergestellt sein.

Die Deckschicht kann aus einem mit einem Harz imprägnierten Fasergewebe oder - gelege gebildet sein. Eine derartige Deckschicht kann aus einem sogenannten Prepreg unter Druck- und Temperatureinwirkung hergestellt werden.

Nach weiterer Maßgabe der Erfindung wird bei einem Verfahren zur Herstellung eines Paneels zur Verkleidung einer Decke oder Wand in einer Kabine, insbesondere der Kabine eines Passagierflugzeugs, vorgeschlagen, dass auf die Platte bei deren Herstellung in einem vorgegebenen Bereich derart mit einer Presskraft beaufschlagt wird, insbesondere dass auf die Platte ein so hoher Druck ausgeübt wird, dass deren ursprüngliche Dicke infolge einer Knickung und/oder Stauchung von Zellwänden des Kerns der Platte in einem vorgegebenen Bereich, um 10 5% bis 50 %, bevorzugt um 10% bis 50% reduziert wird, derart, dass die Knickung und/oder Stauchung erreichte Dickenreduktion bei der fertig gestellten Platte erhalten ist.

Durch die erfindungsgemäß vorgeschlagene Ausübung eines Drucks auf die Platte können im vorgegebenen Bereich die Zellwände gestaucht und/oder geknickt und geschwächt werden, d. h. sie weisen im verformten Zustand Wölbungen, Knicke oder dgl. auf, was sich positiv auf die Schall dämmenden Eigenschaften des Paneels auswirken kann. Das vorgeschlagene Verfahren lässt sich einfach und kostengünstig durchführen, so dass insbesondere die Schall dämmenden Eigenschaften eines Paneels in vergleichsweise einfacher Weise verbessert werden können. Das Verfahren kann insoweit auch als ein Verfahren zur Herstellung einer Schall dämmenden Paneele oder als ein Verfahren zur Verbesserung der Schall dämmenden Eigenschaften bei Paneelen, welche eine aus einer Vielzahl von Zellwänden gebildete, mit zumindest einer Deckschicht versehenen Wabenstruktur aufweisen.

Das Paneel kann abschnittsweise oder auf ihrer ganzen Fläche mit einer Presskraft zur Erzeugung der Knickungen bzw. Stauchungen beaufschlagt werden. Bei teilweise bzw. abschnittsweiser Beaufschlagung des Paneels können angrenzend an gestauchte Bereiche ungestauchte Bereiche umgesetzt werden. Die ungestauchten Bereiche können beispielsweise die gestauchten Bereiche einseitig flankierend oder umrandend ausgebildet sein.

Im Sinne der vorliegenden Erfindung wird unter dem Begriff "Dicke der Platte" eine Höhe der die Wabenstruktur bildenden Zellwände verstanden. Zur Verformung der Wände wird auf die Wabenstruktur bevorzugt eine Kraft ausgeübt, deren Vektor im Wesentlichen parallel zu den Wabenstegen steht, bzw. welche parallel zur Normalenrichtung, insbesondere der lokalen Normalenrichtung des Paneels ist..

Zweckmäßigerweise wird die ursprüngliche Dicke der Platte um 10 bis 30 %, vorzugsweise 15 bis 25 %, reduziert. Aufgrund der nur partiellen Reduzierung der Dicke kann die Festigkeit des gesamten Paneels im Wesentlichen beibehalten werden, oder zumindest kann vermieden werden, dass die Festigkeit des Paneels über Maßen beeinträchtigt wird..

Zur Herstellung der Deckschicht wird vorteilhafterweise ein Halbzeug verwendet, welches aus einem imprägnierten Fasergewebe oder -gelege gebildet ist. Bei den Fasern kann es sich um Glasfasern, Kohlenstofffasern, Aramidfasern oder dgl. handeln. Das Halbzeug liegt zweckmäßigerweise als Prepreg vor. Ein solches Prepreg kann durch Einwirken von Druck und Temperatur schnell und einfach mit der Platte verpresst werden.

Die gezielte Verformung und Schwächung der Zellwände kann in einem Schritt während der Herstellung, insbesondere im Rahmen des Pressvorgangs des Paneels erfolgen, bei welchem Pressvorgang die Decklagen auf die Wabe bzw. den Kern aufgebracht werden. Nachfolgend werden anhand der Zeichnungen Ausführungsbeispiele der Erfindung näher erläutert. Es zeigen:
- Fig. 1: schematisch eine Schnittansicht, bei einem ersten Verfahrensschritt zur Herstellung des Paneels,
- Fig. 2: eine schematische Schnittansicht bei einem zweiten Verfahrensschritt zur Herstellung des Paneels und
- Fig. 3: eine Schnittansicht des hergestellten Paneels.

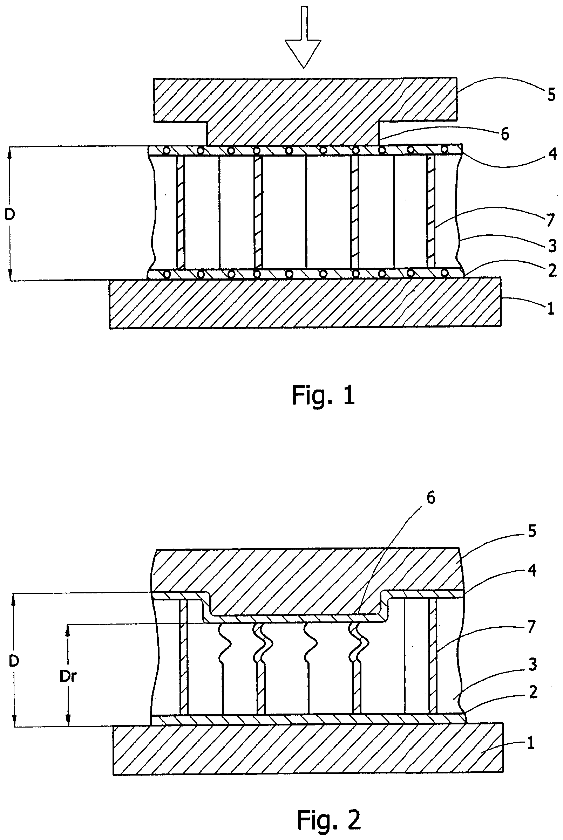

Fig. 1 zeigt in einer schematischen Schnittansicht einen ersten Verfahrensschritt. Auf einen Pressentisch 1 wird ein erstes Prepreg 2 gelegt. Darauf wird eine Wabenplatte 3 gestapelt, welche wiederum von einem zweiten Prepreg 4 überlagert ist. Mit den Bezugszeichen 5 ist ein Stempel einer Presse bezeichnet.

Das erste 2 und das zweite Prepreg 4 bestehen beispielsweise aus einem Fasergewebe oder -gelege, welches vorimprägniert ist.

Die Wabenplatte 3 ist aus einer Vielzahl von Zellwänden 7 gebildet, welche z. B. aus einem aus Aramidfasern gebildeten Faserpapier hergestellt ist. Das Faserpapier ist z. B. mit einem Phenolharz imprägniert. Die Zellwände 7 bilden eine Wabenstruktur. Senkrecht zu den Wänden 7 verlaufen die beiden Öffnungsebenen der Wabenplatte 3, welche durch das erste 2 und das zweite Prepreg 4 überdeckt sind.

Bei dem in Fig. 2 gezeigten zweiten Verfahrensschritt wird der Stempel 5 in Richtung des Pressentischs 1 bewegt und damit ein Druck auf den dazwischen befindlichen Stapel ausgeübt. Gleichzeitig wird eine Temperatur im Bereich von 100 bis 230°C aufgebracht Durch das Aufbringen von Druck und Temperatur wird die Umformung von Prepreg und Wabe sowie die Anbindung der verschiedenen Lagen erreicht.
Infolge der Ausübung des Drucks auf die Platte 3 werden die Zellwände 7 im unterhalb des Vorsprungs 6 befindlichen vorgegebenen Bereich der Platte 3 plastisch verformt. Sie weisen unregelmäßige Wölbungen, Wellungen und/oder Knicke auf. Gleichzeitig werden die Prepegs 2, 4 durch das darin enthaltene aufschmelzende Harz oder Klebeschicht zu dichten Deckschichten verdichtet und mit den Zellwänden 7 der Platte 3 verschweißt. - In Fig. 2 ist eine ursprüngliche Dicke der Platte 3 mit dem Bezugszeichen D bezeichnet. Eine im vorgegebenen Bereich verringerte Dicke Dr entspricht etwa dem 0,8- bis 0,9-Fachen der Dicke D.

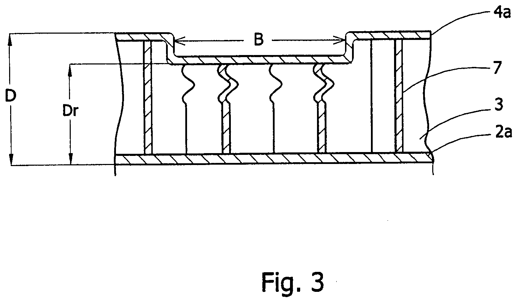

Fig. 3 zeigt eine schematische Schnittansicht durch ein nach dem vorgenannten Verfahren hergestelltes Paneel. Eine aus dem ersten Prepreg 2 gebildete erste Deckschicht ist mit dem Bezugszeichen 2a und eine aus dem zweiten Prepreg 4 gebildete zweite Deckschicht es mit dem Bezugszeichen 4a bezeichnet. Die Wände 7 der zwischen der ersten 2a und der zweiten Deckschicht 4a laminierten Platte 3 sind im vorgegebenen Bereich B unregelmäßig verformt. Sie weisen Wölbungen, Wellungen und/oder Knicke auf.

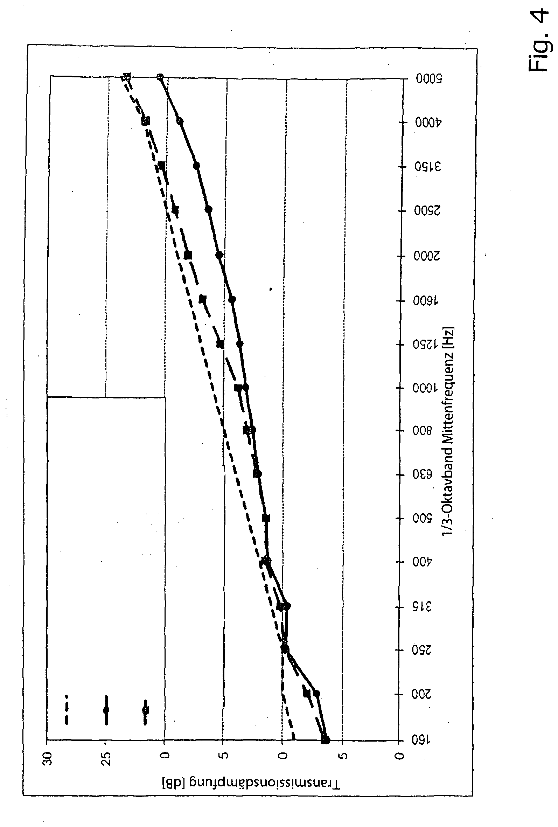

Bei dem in Fig. 4 gezeigten Graphen ist ein Transmissionsverlust über der Frequenz aufgetragen. Die mit Punkten gekennzeichneten Messwerte beschreiben die geräuschdämmenden Eigenschaften eines herkömmlichen Paneels ohne verformte Wände, die mit Quadraten gekennzeichneten Messwerte beschreiben die geräuschdämmenden Eigenschaften eines erfindungsgemäßen Paneels. Die unterbrochene Linie repräsentiert eine Herstellervorgabe.

Wie aus Fig. 4 ersichtlich ist, weist das erfindungsgemäße Paneel insbesondere in einem Frequenzbereich oberhalb von etwa 700 Hz einen verbesserten Transmissionsverlust und damit verbesserte geräuschdämmende Eigenschaften auf. Diese Verbesserung um in diesem Fall ca. 3 dB hätte mit einer konventionellen Massebelegung eine Gewichtserhöhung um 40% zur Folge.

Beim beschriebenen Verfahren erfolgt die Verformung der Zellwände 7 und das Laminieren der ersten 2a und der zweiten Deckschicht 4a vorteilhafterweise gleichzeitig. Es kann im Rahmen der vorliegenden Erfindung aber auch sein, dass die Wände 7 in dem jeweils vorgegebenen Bereich B vor dem Laminieren der Deckschichten 2a, 4a deformiert werden. In diesem Fall ist dann zum Laminieren der Deckschichten 2a, 4a lediglich ein geringerer Druck aufzubringen, da beim Schritt des Laminierens eine Verformung der Wände 7 nicht mehr erforderlich ist.

Der vorgegebene Bereich B kann ein Teilbereich der Platte 3 sein. Es kann aber auch sein, dass der vorgegebene Bereich B sich über die gesamte Platte 3 erstreckt. Es kann auch sein, dass an der dem vorgegebenen Bereich B gegenüberliegenden Seite der Platte 3 zumindest ein weiterer vorgegebener Bereich (hier nicht gezeigt) vorgesehen ist, in welchem die Wände 7 verformt sind.

Es besteht auch die Möglichkeit im Rahmen der vorliegenden Erfindung einen zweischichtigen Kern, d. h. einen Kern mit zwei entsprechende Wabenstrukturen umfassenden übereinanderliegenden Schichten, zu verwenden. Möglich wären auch Kerne mit drei oder mehr Schichten. Insbesondere unter Berücksichtigung der Randbedingungen wie Statik, Kosten, Materialeinsatz, Herstellprozesse usw. kann der Randbereich der Mehrfachkernplatte mit der Dicke D aus zwei Platten dargestellt werden. Es kann eine "Trägerschicht" mit z.B. 10 mm im Randbereich, mit einem weiteren Kern z.B. 5 mm belegt werden. Im vorgegebenen Bereich B kann der Kern bzw. können die Kerne wie beschrieben deformiert werden. Im Randbereich können beiden Kerne einfach miteinander verbunden werden. Auf diese Weise kann ein vergleichsweise dicker, d.h. starker, Randbereich mit vergleichsweise großer ursprünglicher Dicke erreicht werden, ohne dass im vorgegebenen Bereich zu starke Deformationen verursacht werden. bzw. vorhanden sind.

### Bezugszeichenliste

- 1: Pressentisch
- 2: erstes Prepreg
- 2a: erste Deckschicht
- 3: Platte
- 4: zweites Prepreg
- 4a: zweite Deckschicht
- 5: Stempel
- 6: Vorsprung
- 7: Wand

- B: vorgegebener Bereich
- D: ursprüngliche Dicke
- Dr: reduzierte Dicke

## Patentansprüche

1. Paneel zur Verkleidung einer Decke oder Wand in einer Kabine, insbesondere der Kabine eines Passagierflugzeugs, bei dem eine Platte (3) beidseitig mit einer unter Druck und Temperatur ausgehärteten Deckschicht (2a, 4a) aus mit Harz oder einem Thermoplast imprägniertem Fasergewebe oder -gelege laminiert ist, wobei die Platte (3) zumindest einen Kern mit einer aus einer Vielzahl von in Wänden (7) gebildeten Wabenstruktur aufweist, wobei die Wände (7) zur Verbesserung der schalldämmenden Eigenschaften des Paneels in einem vorgegebenen Bereich (B) der Platte (3) um 5% bis 50 % gestaucht sind, wobei der vorgegebene Bereich (B) der Platte (3) einen Flächenanteil von mindestens 50% des gesamten Paneels aufweist und von ungestauchten Bereichen der Platte (3) zumindest teilweise umgeben und/oder berandet ist.

2. Paneel nach Anspruch 1, wobei die Zellwände derart gestaucht oder geknickt sind, dass in einem Frequenzbereich oberhalb von 700 Hz ein erhöhter Transmissionsverlust erreicht ist.

3. Verfahren zur Herstellung von Paneelen nach Anspruch 1 zur Verkleidung einer Decke oder Wand in einer Kabine, bei dem eine Platte (3) beidseitig unter Druck- und Temperatureinwirkung mit einer Deckschicht (2a, 4a) laminiert wird, wobei ein Halbzeug (2, 4) aus mit Harz oder einem Thermoplast imprägniertem Fasergewebe oder-gelege mit der Platte zur Herstellung der Deckschichten (2a, 4a) verpresst wird, wobei die Platte (3) eine aus einer Vielzahl von Zellwänden (7) gebildete Wabenstruktur aufweist, wobei die Platte (3) bei deren Herstellung in einem vorgegebenen Bereich (B) ein so hoher Druck ausgeübt wird, dass deren ursprüngliche Dicke (D) infolge einer Stauchung von Zellwänden (7) der Wabenstruktur um 5 % bis 50% reduziert wird, derart, dass die Dickenreduktion bei der fertig gestellten Platte erhalten ist, wobei der vorgegebene Bereich (B) der Platte (3) einen Flächenanteil von mindestens 50% des gesamten Paneels aufweist und von ungestauchten Bereichen der Platte (3) zumindest teilweise umgeben und/oder berandet ist.

4. Verfahren nach Anspruch 3, wobei die ursprüngliche Dicke (D) der Platte (3) um 10 bis 30%, vorzugsweise 15 bis 25%, reduziert wird.

5. Verfahren nach Anspruch 3 oder 4, wobei die Platte (3) unter Ausübung von Druck und Temperatur verpresst und umgeformt wird.

6. Verfahren nach einem der Ansprüche 3 bis 5, wobei die Platte (3) aus imprägniertem Faserpapier hergestellt ist.

7. Verfahren nach einem der Ansprüche 3 bis 6, wobei das Faserpapier aus Aramidfasern hergestellt ist.

## Claims

1. Panel for lining a ceiling or wall in a cabin, in particular the cabin of a passenger aircraft, in which a plate (3) is laminated on both sides with a cover layer (2a, 4a) cured under pressure and temperature and composed of woven fibre fabric or laid fibre fabric impregnated with resin or with a thermoplastic, wherein the plate (3) has at least one core with a honeycomb structure formed from a multiplicity of in walls (7), wherein the walls (7) are compressed by 5% to 50% in a predefined region (B) of the plate (3) to improve the sound-insulating properties of the panel, wherein the predefined region (B) of the plate (3) has an area percentage of at least 50% of the panel as a whole and is at least partially surrounded and/or bordered by uncompressed regions of the plate (3).

2. Panel according to Claim 1, wherein the cell walls are compressed or buckled in such a manner that an increased transmission loss is achieved in a frequency range above 700 Hz.

3. Method for producing panels according to Claim 1 for lining a ceiling or wall in a cabin, in which a plate (3) is laminated on both sides, under the action of pressure and temperature, with a cover layer (2a, 4a), wherein a semifinished product (2, 4) composed of woven fibre fabric or laid fibre fabric impregnated with resin or with a thermoplastic is pressed together with the plate to produce the cover layers (2a, 4a), wherein the plate (3) has a honeycomb structure formed from a multiplicity of cell walls (7), wherein during the production of the plate (3), such a high pressure is exerted in a predefined region (B) that the original thickness (D) of said plate is reduced by 5% to 50% as a result of a compression of cell walls (7) of the honeycomb structure, in such a manner that the thickness reduction is maintained when the plate is finished, wherein the predefined region (B) of the plate (3) has an area percentage of at least 50% of the panel as a whole and is at least partially surrounded and/or bordered by uncompressed regions of the plate (3) .

4. Method according to Claim 3, wherein the original thickness (D) of the plate (3) is reduced by 10 to 30%, preferably 15 to 25%.

5. Method according to Claim 3 or 4, wherein the plate (3) is pressed together and deformed under exertion of pressure and temperature.

6. Method according to one of Claims 3 to 5, wherein the plate (3) is produced from impregnated fibre paper.

7. Method according to one of Claims 3 to 6, wherein the fibre paper is produced from aramid fibres.

## Revendications

1. Panneau pour l'habillage d'un plafond ou d'une paroi dans une cabine, en particulier la cabine d'un avion de passagers, dans lequel une plaque (3) est stratifiée des deux côtés avec une couche de recouvrement (2a, 4a) durcie par pression et température constituée d'une nappe fibreuse ou d'un tissu fibreux imprégné(e) de résine ou de résine thermoplastique, la plaque (3) présentant au moins un noyau avec une structure en nid d'abeilles formée d'une pluralité de dans des parois (7), les parois (7), pour améliorer les propriétés d'atténuation du son du panneau, étant écrasées de 5 % à 50 % dans une région prédéfinie (B) de la plaque (3), la région prédéfinie (B) de la plaque (3) constituant une proportion de surface d'au moins 50 % du panneau entier et étant au moins en partie entourée et/ou bordée par les régions non écrasées de la plaque (3).

2. Panneau selon la revendication 1, dans lequel les parois cellulaires sont écrasées ou fléchies de telle sorte que l'on obtienne une perte de transmission supérieure dans une plage de fréquences au-dessus de 700 Hz.

3. Procédé de fabrication de panneaux selon la revendication 1 pour l'habillage d'un plafond ou d'une paroi dans une cabine, dans lequel une plaque (3) est stratifiée des deux côtés par application de pression et de température avec une couche de recouvrement (2a, 4a), un produit semi-fini (2, 4) constitué d'une nappe fibreuse ou d'un tissu fibreux imprégné(e) de résine ou de résine thermoplastique, étant pressé avec la plaque pour fabriquer les couches de recouvrement (2a, 4a), la plaque (3) présentant une structure en nid d'abeilles formée d'une pluralité de parois cellulaires (7), une pression suffisamment élevée étant exercée dans une région prédéfinie (B) la plaque (3) lors de sa fabrication, pour que son épaisseur initiale (D) soit réduite de 5 % à 50 % suite à un écrasement des parois cellulaires (7) dans la structure en nid d'abeilles de telle sorte que l'on obtienne une réduction d'épaisseur dans la plaque finie, la région prédéfinie (B) de la plaque (3) présentant une proportion de surface d'au moins 50 % du panneau entier et étant au moins en partie entourée et/ou bordée par les régions non écrasées de la plaque (3).

4. Procédé selon la revendication 3, dans lequel l'épaisseur initiale (D) de la plaque (3) est réduite de 10 à 30 %, de préférence de 15 à 25 %.

5. Procédé selon la revendication 3 ou 4, dans lequel la plaque (3) est pressée et déformée par application de pression et de température.

6. Procédé selon l'une quelconque des revendications 3 à 5, dans lequel la plaque (3) est fabriquée à partir de papier fibreux imprégné.

7. Procédé selon l'une quelconque des revendications 3 à 6, dans lequel le papier fibreux est constitué de fibres d'aramide.
